# EUROPÄISCHE PATENTSCHRIFT

(11) **EP 1 689 550 B1**
(45) Veröffentlichungstag und Bekanntmachung des Hinweises auf die Patenterteilung: **09.05.2007**
(21) Anmeldenummer: 04798015.6
(22) Anmeldetag: 19.11.2004
(51) Int. Cl.: B23K 9/28

(54) **SCHWEISSBRENNERVORRICHTUNG ZUM ANSCHLUSS AN EINEN SCHWEISSROBOTER**
WELDING TORCH DEVICE FOR CONNECTION TO A WELDING ROBOT
SYSTEME DE CHALUMEAU A SOUDER A RACCORDER A UN ROBOT A SOUDER

(30) Priorität: 21.11.2003 DE 10354880
(43) Veröffentlichungstag der Anmeldung: 16.08.2006
(73) Patentinhaber: SKS Welding Systems GmbH, 66849 Landstuhl (DE)
(72) Erfinder: KLEIN, Thomas, 67731 Otterbach (DE)
(74) Vertreter: Klein, Friedrich
(86) Internationale Anmeldenummer: PCT/EP2004/013172
(87) Internationale Veröffentlichungsnummer: WO 2005/049259

(56) Entgegenhaltungen:
- EP-A- 0 873 826
- EP-A- 1 358 973
- US-A- 4 705 243
- PATENT ABSTRACTS OF JAPAN Bd. 2000, Nr. 09, 13. Oktober 2000 (2000-10-13) & JP 2000 158376 A (B L AUTO TEC KK), 13. Juni 2000 (2000-06-13)

## Beschreibung

Die Erfindung betrifft eine Schweißbrennervorrichtung eines Schweißroboter, die für elektrische Lichtbogenschweißungen, insbesondere MIG- oder MAG-Schweißungen, vorgesehen ist. Ein solcher Schweißroboter weist üblicherweise einen Roboterarm auf, an dem ein relativ zum Roboterarm drehbarer Anschlußflansch vorgesehen ist. Die Schweißbrennervorrichtung umfaßt eine Befestigungseinrichtung zur Anbringung der Schweißbrennervorrichtung am Schweißroboter sowie eine Aufnahmeeinrichtung zur Aufnahme eines Schweißbrenners und zur Übertragung einer vorzugsweise motorisch angetriebenen rotatorischen Bewegung auf den Schweißbrenner. Mittels eines Anschlusses für ein Schweißstromkabel, kann eine Roboterseite der Schweißbrennervorrichtung mit einer Schweißstromquelle elektrisch verbunden werden. Die Schweißbrennervorrichtung umfaßt ferner eine Stromübertragungseinrichtung, über die das Schweißstromkabel mit einer Schweißbrennerseite der Schweißbrennervorrichtung elektrisch verbindbar ist, wobei die Stromübertragungseinrichtung einen Stator aufweist, der gegenüber dem Roboterarm zur drehfesten Anordnung vorgesehen ist, jedoch in Bezug auf den Anschlußflansch des Schweißroboters relativ drehbar ist. Der Stator sollte hierbei mit einer Durchführung versehen sein, durch die zumindest eines der für den Schweißprozeß benötigten Schweißmedien in Richtung zur Aufnahmeeinrichtung durchführbar ist.

Zur Ausführung von Lichtbogenschweißungen bei industriellen Serienproduktionen werden zur Automatisierung solcher Fertigungsvorgänge nahezu ausschließlich Schweißautomaten benutzt, insbesondere Knickarmroboter. Derartige Schweißautomaten sind in der Regel um mehrere Achsen beweglich. Durch diese Beweglichkeit der Schweißroboter soll erreicht werden, daß der Schweißbrenner auch kompliziert verlaufende Schweißbahnen abfahren kann. Der eigentliche Schweißbrenner, d.h. jenes Bauteil, von dem der Lichtbogen zum jeweiligen Werkstück geführt ist, wird üblicherweise an einer Aufnahmeeinrichtung einer Schweißbrennervorrichtung angeordnet. Die Schweißbrennervorrichtung wird wiederum über einen Flansch, ein Bajonett oder eine sonstige Befestigungseinrichtung am freien Ende des Roboterarms befestigt.

Hierbei hat sich jedoch insbesondere bei Lichtbogenschweißanlagen die in der Regel gewünschte Schwenkmöglichkeit des Schweißbrenners um eine Achse eines Anschlußflansches des Roboterarms als äußerst problematisch gezeigt. An diesem Anschlußflansch ist der Schweißbrenner üblicherweise über eine als Schweißbrennervorrichtung bezeichnete Baugruppe lösbar befestigt. Bisher war es üblich solche Schweißbrennervorrichtungen über einen Halter am Roboter zu befestigen, wobei die Schwenkachse der Schweißbrennervorrichtung mit der Drehachse des Schweißbrenners nicht identisch ist. Hierbei nimmt der Halter die Schweißbrennervorrichtung üblicherweise schräg gegenüber der Rotationsachse des Anschlußflanschs auf.

Durch die sich daraus ergebende Schwenkbewegung des Halters werden die für MIG- oder MAG-Schweißungen erforderlichen Versorgungsmittel, wie das zumindest eine Stromkabel, eine Schutzgasleitung, ein Schweißdraht und gegebenenfalls auch Datenleitungen, stark auf Torsion belastet. Dies hat häufig Brüche dieser Versorgungsmittel zur Folge, was wiederum unproduktive Ausfallzeiten der jeweiligen Schweißanlage nach sich zieht. Zudem schränken die Versorgungsmittel die Beweglichkeit des Schweißbrenners stark ein. Üblicherweise kann der Schweißbrenner aufgrund der Versorgungsmittel nicht mehr als ± 180° in einer Rotationsrichtung gedreht werden. Zur Vermeidung einer übermäßig starken Belastung muß der Schweißbrenner anschließend in entgegengesetzter Rotationsrichtung zurückgedreht werden. Außer der bereits angesprochenen Einschränkung der Bewegungsmöglichkeiten sind dadurch auch unproduktive Bewegungen des Roboters erforderlich, die die Taktzeiten von Fertigungsprozessen erhöhen.

Um hier eine Verbesserung erzielen, wird in der DE 43 25 289 A1 insbesondere für handgeführte Schweißbrenner vorgeschlagen das Schweißkabel fest mit einem hohlzylindrischen Kontaktstift zu verbinden. Der Kontaktstift soll wiederum in eine ebenfalls hohlzylindrische drehbare Buchse eingeführt werden, an die auch der Schweißbrenner angeschlossen wird. Die in der DE 43 25 289 A1 gezeigte Vorrichtung soll dann in die bisher üblichen Halter für Handschweißgriffe oder Schweißautomaten geklemmt werden.

Der Erfindung liegt deshalb die Aufgabe zugrunde bei gattungsgemäßen Schweißbrennervorrichtungen, die zur Anbringung an einen Knickarmroboter vorgesehen sind, eine technisch vorteilhafte Anschlußmöglichkeit zu schaffen. Es soll vorzugsweise auch eine Endlosrotationsmöglichkeit für Schweißbrenner erzielt werden können.

Diese Aufgabe wird bei einer Vorrichtung der eingangs genannten Art erfindungsgemäß durch die Befestigungseinrichtung des Rotors gelöst, die zur Anbringung an der Anschlußeinrichtung des Roboters ausgebildet ist, wobei durch die Anbringung an der Anschlußeinrichtung des Roboters eine Drehachse des Rotors zur Drehachse der Anschlußeinrichtung des Roboters zumindest im wesentlichen koaxial ausgerichtet und der Rotor um die Drehachse der Anschlußeinrichtung sowie um den Stator drehbar ist.

Der Erfindung liegt zum einen der Gedanke zugrunde, die Schweißbrennervorrichtung mit zwei Bauteilen bzw. Bauteilgruppen zu versehen, die relativ zueinander drehbeweglich sind. Die am Schweißroboter anzubringende Befestigungseinrichtung sollte mit dem Anschlußflansch des Roboters drehfest verbunden sein, während der roboterseitige Anschlußflansch - und damit auch die Befestigungseinrichtung - relativ gegenüber dem den Strom führenden Stator rotierbar ist. Der Stator sollte mit einem von der Schweißstromquelle kommenden Schweißstromkabel statisch, d.h. ohne Drehmöglichkeit, lösbar verbindbar sein. Die den eigentlichen Schweißbrenner tragende Aufnahmeeinrichtung kann hingegen mit der Befestigungseinrichtung wiederum - und damit auch mit der rotatorisch angetriebenen Anschlußeinrichtung, wie beispielsweise einem Roboterflansch - drehfest verbunden sein.

Zum anderen sollte erfindungsgemäß das Schweißstromkabel nicht an der Befestigungseinrichtung vorbei an den Schweißbrenner geführt werden. Um zwischen dem Schweißstromkabei auf der Roboterseite und dem Schweißbrenner eine elektrische Verbindung zu ermöglichen, ist an der Schweißbrennervorrichtung eine Stromübertragungseinrichtung vorgesehen, die durch die Befestigungseinrichtung hindurchgeführt ist. Die Stromübertragungseinrichtung weist hierzu für das Schweißkabel am Stator einen Anschluß auf. Der Stator kann mit Vorteil vollständig, vorzugsweise bis in den Bereich des Schweißbrenners, durch die Befestigungseinrichtung hindurch geführt sein. Gegenüber anderen denkbaren Ausführungsformen können hierdurch zumindest weitestgehend Dichtmittel für die Schutzgas führende Durchführung vermieden werden. Außerdem ermöglicht diese Lösung den Strom erst im Bereich des Schweißbrenners vom Stator zu übertragen.

Über eine elektrisch leitende Kontakteinrichtung der Stromübertragungseinrichtung kann der Strom vom Stator vorzugsweise direkt zur Aufnahmeeinrichtung und schließlich zum Schweißbrenner gelangen. Besonders vorteilhaft kann hierbei sein, wenn der Stator und zumindest ein Teil des Rotors, insbesondere die Befestigungseinrichtung, sonst elektrisch voneinander isoliert sind. Die Stromübertragung sollte vorzugsweise ausschließlich durch die Kontakteinrichtung vorgenommen werden. Damit müssen am Roboter selbst keine Maßnahmen getroffen werden, damit dieser nicht unter Strom steht. Außerdem verringert dies ganz erheblich die Gefahr von Stromunfällen, falls Bedienpersonal an der Schweißvorrichtung hantieren sollte, bevor der Strom abgeschaltet ist. Andererseits läßt sich eine mechanisch besonders stabile und trotzdem einfache Ausgestaltung dadurch erreichen, daß der Rotor am stromführenden Stator gelagert ist.

Die für das jeweils angewandte Schweißverfahren erforderlichen Verbrauchsstoffe, wie ein Schweißdraht und/oder Schutzgas, können erfindungsgemäß über die Durchführung des Stators von der Roboterseite der Schweißbrennervorrichtung hin zur Aufnahmeeinrichtung gelangen. Vorzugsweise weist auch die Aufnahmeeinrichtung eine Durchführung auf, mittels der die Verbrauchsstoffe durch die Aufnahmeeinrichtung hindurch dem Schweißbrenner zuführbar sind. Eine konstruktiv besonders günstige Ausgestaltung kann vorsehen, daß die Achsen der beiden Durchführungen miteinander fluchten, wobei die Durchführung der Aufnahmeeinrichtung die Durchführung des Stators umgibt.

Der konstruktive Aufwand kann besonders gering gehalten werden, wenn Schutzgas und Schweißdraht durch die gleiche Ausnehmung der Durchführung des Stators in Richtung zum Schweißbrenner gelangen. Es ist aber auch denkbar, daß hierfür mehrere Ausnehmungen vorgesehen sind. Der konstruktive Aufwand läßt sich nochmals reduzieren, wenn eine die Ausnehmung der Durchführung des Stators begrenzende Wand elektrisch leitend und Bestandteil der Stromübertragungseinrichtung des Schweißstroms ist. Hierdurch kann auf sonst erforderliche zusätzliche stromführende Mittel verzichtet werden.

Ein Datenkabel kann ebenfalls im Bereich des Stators in die Befestigungseinrichtung eingeführt und an geeigneter Stelle wieder ausgeführt sein. Das Daten- oder auch Signalkabel kann im Bereich des Schweißbrennervorrichtung Daten oder Meßsignale erfaßen oder zur Verfügung stellen.

Bei einer weiteren vorteilhaften erfindungsgemäßen Ausgestaltung kann vorgesehen sein, daß der Schweißstrom mittels einem oder mehreren Schleifkontakten auf die Aufnahmeeinrichtung übertragbar ist. Der zumindest eine Schleifkontakt kann mit Vorteil im Bereich eines schweißbrennerseitigen Endes der Schweißbrennervorrichtung, insbesondere der Durchführung, vorgesehen sein.

Eine besonders günstige Ausgestaltung der Erfindung kann hierbei eine Kraftbelastung, vorzugsweise eine Federbelastung, des Schleifkontakts vorsehen, mit dem ein ständiger Kontakt des Schleifkontaktes mit einem Kontaktpartner sichergestellt wird. Besonders vorteilhaft ist es, wenn durch die Kraftbelastung eine Anlage des Schleifkontaktes sowohl in axialer als auch in radialer Richtung der Rotationsbewegung des roboterseitigen Anschlußflansches erfolgt. Hierdurch kann sowohl mit einem rotationsfesten als auch mit einem rotierenden Kontaktpartner ein sicherer elektrischer Kontakt erzeugt werden. Diese Lösung hat zudem den Vorteil, daß Fertigungstoleranzen und ein Verschleiß des Schleifkontakts und der Kontaktpartner in weiten Bereichen ausgeglichen werden kann.

Des weiteren kann es zweckmäßig sein, wenn - abgesehen vom Schweißbrenner selbst - die Schweißbrennervorrichtung, insbesondere der Rotor und der Stator, eine bauliche Einheit darstellen. Um die Schweißbrennervorrichtung an einem Schweißroboter anzuordnen sollte es nur erforderlich sein die Schweißbrennervorrichtung mittels ihrer Anschlußeinrichtung des Rotors am Schweißroboter zu befestigen. Zur Demontage ist dann auch nur das Lösen der Anschlußeinrichtung, des Schweißstromkabels und gegebenenfalls noch das Lösen von einem Datenkabel erforderlich. Damit kann trotz der Funktionalität der Schweißvorrichtung auf besonders einfache und schnelle Weise ein Schweißroboter umgerüstet werden.

Weitere bevorzugte Ausgestaltungen der Erfindung ergeben sich aus den Ansprüchen, der Beschreibung und der Zeichnung.

Die Erfindung wird anhand eines in den Figuren rein schematisch dargestellten Ausführungsbeispiels näher erläutert, es zeigen:
- Fig. 1: eine stark schematisierte Darstellung eines als Schweißroboter vorgesehenen Knickarmroboters;
- Fig. 2: eine stark schematisierte prinzipielle Darstellung einer Ausführungsform einer erfindungsgemäßen Schweißbrennervorrichtung;
- Fig. 3: eine detailiertere Darstellung der Schweißbrennervorrichtung von Fig. 2;
- Fig. 4: ein Stator der Schweißbrennervorrichtung aus Fig. 3 zusammen mit einer Schleifkontakteinrichtung in einer Schnittdarstellung;
- Fig. 5: eine Seitenansicht der Baugruppe von Fig. 4;
- Fig. 6: eine Querschnittsdarsteilung der Schleifkontakteinrichtung;
- Fig. 7: eine Ausführungsform eines geeigneten Knickarmroboters;
- Fig. 8: ein vergrößerte Detaildarstellung gemäß der Linie A aus Fig. 1.

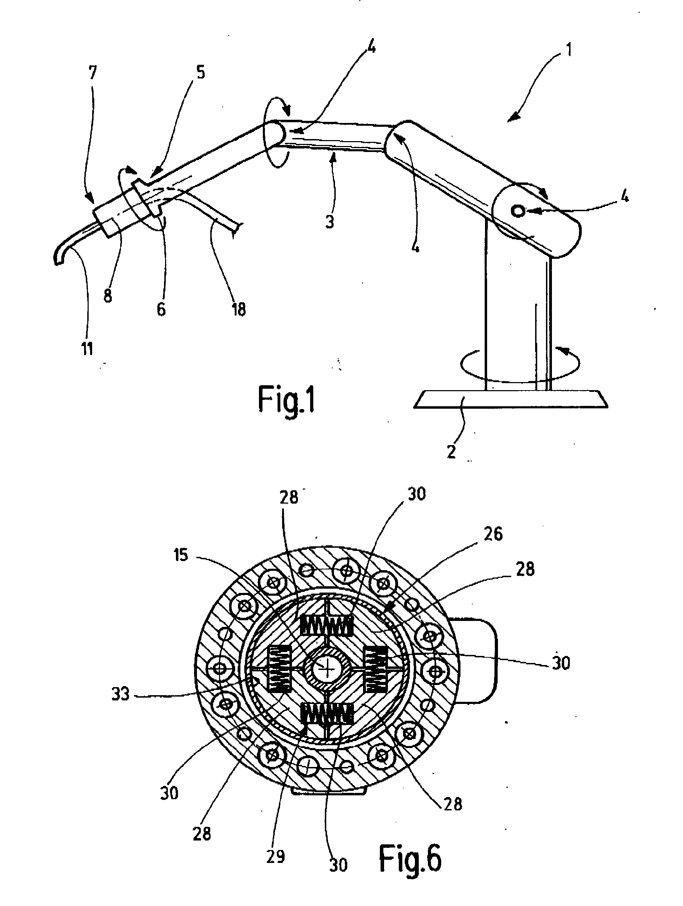

Bei dem in den Fig. 1, 7 und 8 gezeigten Knickarmroboter 1 handelt es sich um einen handelsüblichen Roboter, wie er in vielfacher Weise eingesetzt wird. Im Zusammenhang mit der Erfindung eignen sich beispielsweise die Roboter der EA-Serie, die von dem Unternehmen Motoman robotec GmbH, 85391 Allershausen, angeboten werden. Der Roboter weist ein Gestellteil 2 und einen daran angeordneten Arm 3 auf, der mit mehreren Gelenken 4 versehen ist. Das freie Ende 5 des Armes des Knickarmroboters ist hierdurch in der Lage beliebige dreidimensional verlaufende Bewegungsbahnen abzufahren.

Am freien Ende 5 des Armes 3 ist der Roboter mit einem Anschlußflansch 6 einer Anschlußeinrichtung versehen, der zur Aufnahme einer Schweißbrennervorrichtung 7 (Fig. 1) vorgesehen ist. Der Anschlußflansch 6 kann um eine Rotationsachse 8 und relativ zum letzten Glied des Armes 3 eine motorisch angetriebene Rotationsbewegung ausführen.

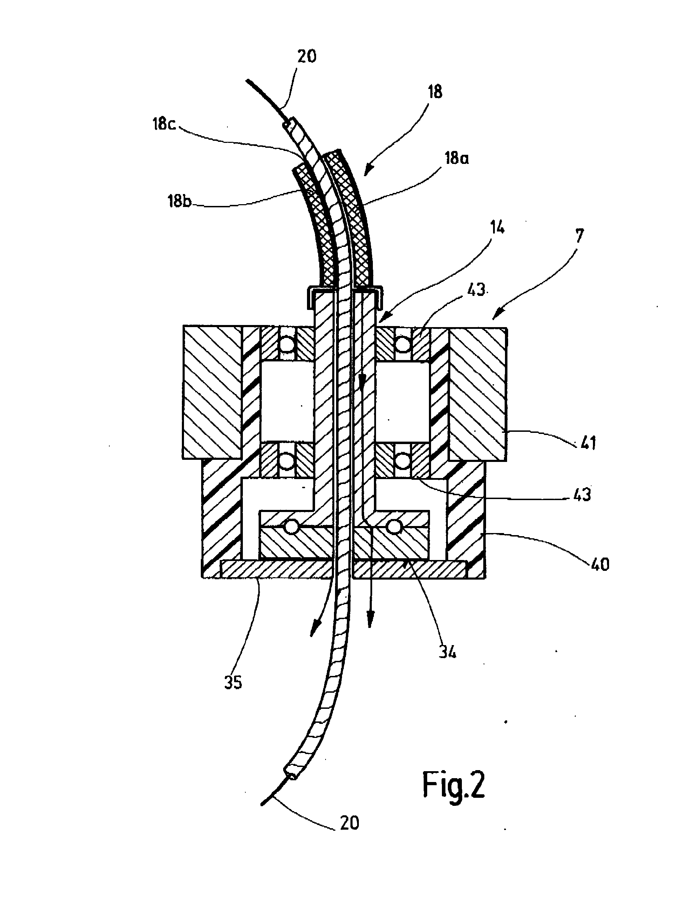

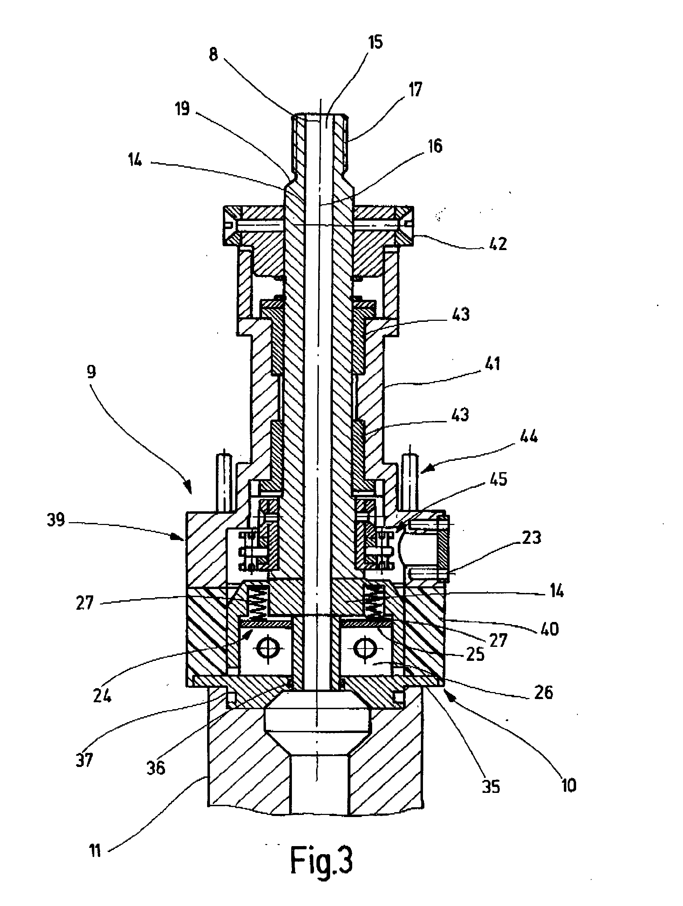

Die in den Figuren 2 bis 6 näher gezeigte Schweißbrennervorrichtung 7 hat eine Befestigungseinrichtung 9 und eine Aufnahmeeinrichtung 10 (Fig. 3). Die Befestigungseinrichtung 9 ist dazu vorgesehen, die Schweißbrennervorrichtung mit dem Anschlußflansch 6 des Roboterarmes 3 lösbar, aber drehfest, zu verbinden. Die Aufnahmeeinrichtung 10 dient hingegen zur Aufnahme eines Schweißbrenners 11 und zur nachfolgend noch näher erläuterten Übertragung des Schweißstromes auf den Schweißbrenner 11. Da die Aufnahmeeinrichtung 10 in einer nachfolgend noch näher erläuterten Weise über die Befestigungseinrichtung 9 drehfest mit dem Rotationsbewegungen ausführenden Anschlußflansch 6 des Roboters verbindbar ist, werden die Aufnahmeeinrichtung 10 und die Befestigungseinrichtung 9 auch gemeinsam als Rotor bezeichnet. Bezogen auf das letzte Glied des Roboterarmes 3, an dem der Anschlußflansch angebracht ist, ist der Rotor um die Achse 8 drehbar.

Ein gegenüber dem Rotor und dem letzten Glied des Roboterarmes 3 drehfester Stator weist eine in der Schweißbrennervorrichtung mittig (zentrisch) angeordnete rohrförmige Durchführung 14 auf, die eine zylindrische Ausnehmung 15 hat. Eine Längsachse 16 der Ausnehmung 15 fluchtet mit der Rotationsachse 8 des Anschlußflansches 6. Die Durchführung 14 erstreckt sich etwa über die gesamte Länge der Befestigungs- und der Aufnahmeeinrichtung. Das obere roboterseitige Ende der Durchführung 14 ist mit einem als elektrischer Anschluß dienendem Außengewinde 17 versehen, auf das ein Koaxialkabel 18 (Fig. 1 und Fig. 2) durch aufschrauben lösbar befestigt werden kann. Zusätzlich zum Gewinde 17 der Durchführung kann auch ein Konus 19 (Fig. 3) als stromleitender Kontakt zwischen einem Schweißstromkabel 18a des Koaxialkabels 18 und der Durchführung 14 vorgesehen sein. Bei einem solchen Koaxialkabel 18 ist das mit einer Außenisolation 18b versehene Schweißstromkabel 18a koaxial um einen mittigen Kanal 18c angeordnet. Der mittige Kanal 18c kann dazu dienen einen Schweißdraht 20 durch eine Vorschubbewegung dem Schweißbrenner zuzuführen und ein Schutzgas zum Schweißbrenner fließen zu lassen.

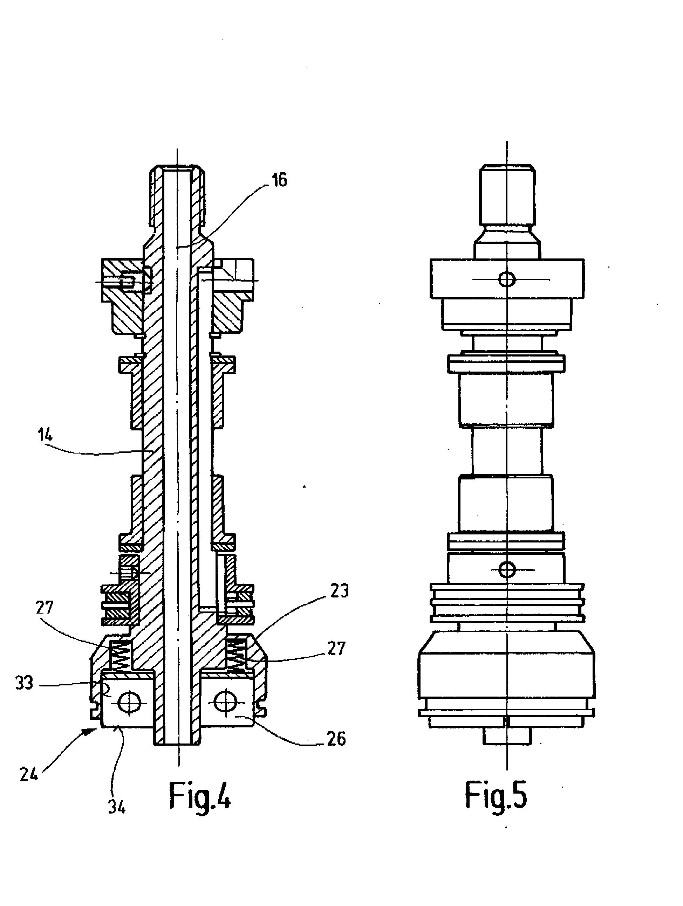

Im Bereich eines unteren schweißbrennerseitigen Endes wird die Durchführung 14 von einem im Querschnitt kreisrunden glockenförmigen Abschnitt 23 (Fig. 3 und Fig. 4) des Stators umgeben, der mit der Durchführung elektrisch leitend verbunden ist. Im Ausführungsbeispiel sind der glockenförmige Abschnitt 23 und die Durchführung 14 einstückig verbunden. Im wesentlichen innerhalb des glockenförmigen Abschnitts ist auf der Durchführung 14 eine Kontakteinrichtung 24 angeordnet. Die Kontakteinrichtung 24 weist eine Druckscheibe 25 (Fig. 3) und einen mehrteiligen Schleifring 26 auf. Die Druckscheibe 25 ist zum einen von mehreren parallel zur Längsachse 16 der Durchführung 14 wirkenden Druckfedern 27 kraftbelastet. Die Druckfedern 27 stützen sich am glockenförmigen Abschnitt 23 des Stators ab und drücken die Druckscheibe 25 auf den Schleifring 26.

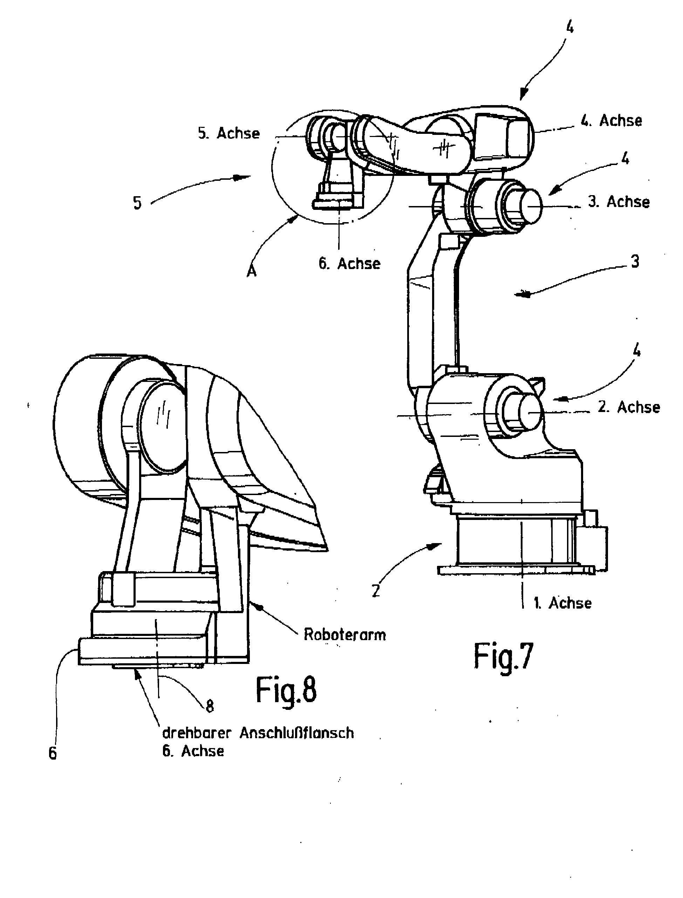

Der Schleifring 26 setzt sich aus vier jeweils 90°-Schleifkontaktelementen 28 zusammen (Fig. 6), die an ihren einander gegenüberliegenden radialen Begrenzungsflächen jeweils einseitig offene Taschen aufweisen. Da sich Öffnungen der taschenartigen Ausnehmungen unmittelbar gegenüber liegen, bilden jeweils zwei der Taschen eine im wesentlichen geschlossene Ausnehmung 29. In jeder der Ausnehmungen 29 ist jeweils eine Druckfeder 30 angeordnet. Die Wirkrichtungen von jeweils zwei radial gegenüberliegenden Druckfedern 30 verlaufen parallel zueinander, während die Wirkrichtungen von in Umfangsrichtung aufeinander folgender Druckfedern 30 senkrecht zueinander ausgerichtet sind. Die Druckfedern 30 bewirken, daß die Schleifkontaktelemente 28 an eine Innenfläche 33 des glockenförmigen Abschnitts 23 gedrückt werden. Als Werkstoff weisen die Schleifkontaktelemente einen guten elektrischen Leiter auf, beispielsweise Kupfer oder Kohle. Die der Druckscheibe 25 abgewandte Seite des Schleifringes 26 wirkt als Schleiffläche 34 (Fig. 4) zur Stromübertragung.

In Richtung der Längsachse 16 der Durchführung 14 schließt sich an den Schleifring 26 ein auf das schweißbrennerseitige Ende der Durchführung 14 aufgeschobener Deckel 35 (Fig. 3) an, der ebenfalls elektrisch leitend ist. Durch die Druckfedern 27 ist der Deckel 35 über die Schleiffläche 34 ständig mit dem Schleifring in Kontakt. Der Deckel 3 ist in Bezug auf seine axiale Position auf der Durchführung in nicht näher erläuterte Weise gesichert. Zudem befindet sich zwischen der Durchführung 14 und dem Deckel 35 eine Dichtung 36, mit der sichergestellt werden kann, daß der Deckel gasdicht auf der Mantelfläche der Durchführung sitzt. Auf eine äußere Flanschfläche 37 (Fig. 3) des Deckels 35 kann der Schweißbrenner 11 aufgeschoben und gesichert sein. Das untere Ende der Durchführung 14 mündet hierbei in den Schweißbrenner 11 hinein.

Die Durchführung 14 und der glockenförmige Abschnitt 23 sind von einem mehrteiligen und im Querschnitt variierenden hohlzylindrischen Gehäuse 39 des Rotors umgeben. Das Gehäuse 39 weist entweder selbst Isolationswerkstoff auf oder ist durch andere Bauelemente vom Stator elektrisch isoliert. Im dargestellten Ausführungsbeispiel ist der Deckel 35 in einen unteren Kunststoffring 40 des Gehäuses 39 eingesetzt, wobei der Kunststoffring 40 auch den glockenförmigen Abschnitt 23 umgibt.

An den Kunststoffring 40 schließt sich ein weiterer Hohlzylinder 41 des Gehäuses an, der sich bis zu einem Abschlußflansch 42 des Stators erstreckt. Der Abschlußflansch 42 ist auf die Durchführung 14 aufgeschoben und befindet sich unterhalb des Konus 19. Über zwei zwischen dem Abschlußflansch 42 und dem glockenförmigen Abschnitt 23 angeordnete Lager 43, beispielsweise isolierende Gleitlager (Kunststoffgleitlager), ist eine Drehbarkeit des Hohlzylinders 41 gegenüber der Durchführung 14 und zudem eine elektrische Isolation realisiert. Auf einer äußeren Mantelfläche des Hohlzylinders ist auch ein Adapter 44 (Fig. 3) der Befestigungseinrichtung integriert, mit dem die gesamte Schweißbrennervorrichtung 7 an den Anschlußflansch 6 des Roboters lösbar befestigt werden kann (Fig. 1). Der Adapter 44 weist hierzu Formschlußelemente auf, wie beispielsweise Stifte, die in ein entsprechendes Bohrungsbild des Anschlußflansches passen.

Der Hohlzylinder 41, der Kunststoffring 40, der Deckel 35 und der Schweißbrenner 11 sind drehfest miteinander verbunden. Hierdurch ist es möglich eine rotative Antriebsbewegung des Anschlußflansches 6 über den Hohlzylinder 41, den Kunststoffring 40 und den Deckel 35 auf den Schweißbrenner zu übertragen. Der Stator führt diese Drehbewegung hingegen nicht aus, da er über das Koaxialkabel 18 - und gegebenenfalls über weitere Befestigungsmittel - am Roboterarm rotatorisch fixiert ist. Der Widerstand gegen Torsion, die derartige Kabel aufweisen, kann jedoch bereits ausreichen, um den Stator zu fixieren, obwohl aufgrund von nicht ganz auszuschließenden Reibmomenten ein geringer Anteil des Drehmoments der Antriebsbewegung über die Lager 43 möglicherweise auf den Stator übertragen werden kann. Soweit es erforderlich erscheint, kann jedoch der Stator auch beispielsweise über den Abschlußflansch 42 zusätzlich an einem rotationsfesten Bauteil des Roboters fixiert werden.

Der Schweißstrom wird vom Schweißstromkabel 18b über die Durchführung 14 auf den glockenförmigen Abschnitt 23 und von hieraus auf die Schleifkontakteinrichtung übertragen. Mittels der Schleiffläche 34 gelangt der Strom zum Deckel 35 und von dort zum Schweißbrenner 11.

Das Schutzgas kann über das Koaxialkabel 18 durch die Ausnehmung 15 der Durchführung 14 zum Schweißbrenner 11 strömen. Der Schweißdraht 20 kann auf dem gleichen Weg ebenfalls dem Schweißbrenner 11 zugeführt und jeweils nachgeschoben werden. Soweit es erforderlich ist, kann ein nicht dargestelltes Datenkabel in das Koaxialkabel 18 integriert sein. Das Datenkabel wird über eine Bohrung 42a des Abschlußflansch in eine äußere Längsnut 14a der Durchführung 14 eingebracht und zu einem weiteren nicht näher erläuterten Schleifkontakt 45 geführt. Das Datenkabel kann beispielsweise als Signalkabel für eine sogenannte Abschaltdose (nicht dargestellt) vorgesehen sein. Über ein solches Signalkabel sendet die Abschaltdose bei Kollision des Schweißbrenners ein Notaussignal an die Steuerung des Roboters. Im dargestellten Ausführungsbeispiel ist zur Signalübertragung zwischen der Abschaltdose und dem Signalkabel der Schleifkontakt 45 vorgesehen, der sich im Bereich zwischen dem glockenförmigen Abschnitt 23 und dem unteren der beiden Gleitlager 43 befindet.

## Patentansprüche

1. Schweißbrennervorrichtung (7) eines Schweißroboters (1), die für elektrische Lichtbogenschweißungen, insbesondere MIG- oder MAG-Schweißungen, vorgesehen ist, wobei der Schweißroboter einen Roboterarm aufweist, an dem ein relativ zum Roboterarm drehbare Anschlußeinrichtung vorgesehen ist, umfassend
eine Befestigungseinrichtung (9) zur Anbringung der Schweißbrennervorrichtung (7) am Schweißroboter (1),
eine Aufnahmeeinrichtung zur Halterung eines Schweißbrenners (11) und zur Übertragung von angetriebenen rotatorischen Bewegungen auf den Schweißbrenner,
einen elektrischen Anschluß (12,19) für ein Schweißstromkabel, mittels dem eine Roboterseite der Schweißbrennervorrichtung mit einer Schweißstromquelle elektrisch verbindbar ist,
eine Stromübertragungseinrichtung, über die das Schweißstromkabel mit einer Schweißbrennerseite der Schweißbrennervorrichtung elektrisch verbindbar ist, wobei die Stromübertragungseinrichtung einen Stator aufweist, der gegenüber dem Roboterarm zur drehfesten Anordnung vorgesehen ist, in Bezug auf die schweißroboterseitige Anschlußeinrichtung jedoch relativ drehbar ist,
eine Durchführung (14) des Stators, durch die zumindest einer der für den Schweißvorgang benötigten Verbrauchsstoffe in Richtung zur Aufnahmeeinrichtung (10) durchführbar ist, wobei
die Aufnahmeeinrichtung (10) und die Befestigungseinrichtung (9) als Rotor ausgebildet sind, die hierdurch relativ gegenüber dem Stator rotierbar sind, und die Aufnahmeeinrichtung (10) und/oder die Befestigungseinrichtung (9) mittels einer elektrischen Kontakteinrichtung (24) mit dem Stator elektrisch leitend verbindbar sind,
**gekennzeichnet, durch** die Befestigungseinrichtung (9) des Rotors, die zur Anbringung an der Anschlußeinrichtung des Roboters ausgebildet ist, wobei durch die Anbringung an der Anschlußeinrichtung des Roboters eine Drehachse des Rotors mit der Drehachse (8) der Anschlußeinrichtung des Roboters zumindest im wesentlichen fluchtet und der Rotor um die Drehachse (8) sowie um den Stator drehbar ist.

2. Schweißbrennervorrichtung nach Anspruch 1, **dadurch gekennzeichnet, daß** eine Längsachse (16) der Durchführung mit der Drehachse (8) der Anschlußeinrichtung fluchtet.

3. Schweißbrennervorrichtung nach nach einem der beiden vorhergehenden Anspruch 1 oder 2, **dadurch gekennzeichnet, daß** der Stator einen drehfesten elektrischen Anschluß für das Schweißkabel aufweist, durch den die Drehachse der Anschlußeinrichtung verläuft.

4. Schweißbrennervorrichtung nach einem der vorhergehenden Ansprüche, **dadurch gekennzeichnet, daß** die Aufnahmeeinrichtung (10) für den Schweißbrenner (11) ebenfalls mit einer Durchführung für den Schweißdraht versehen ist, wobei die Durchführung (14) des Stators und die Durchführung der Aufnahmeeinrichtung (10) zumindest im wesentlichen koaxial zueinander verlaufen.

5. Schweißbrennervorrichtung nach einem der vorhergehenden Ansprüche, **dadurch gekennzeichnet, daß** eine Längsachse (16) einer Ausnehmung (15) der Durchführung (14) des Stators zumindest im wesentlichen koaxial mit der Drehachse (8) der rotatorischen Bewegung des roboterseitigen Anschlußflansches verläuft.

6. Schweißbrennervorrichtung nach einem der vorhergehenden Ansprüchen, **dadurch gekennzeichnet, daß** eine gemeinsame Rotationsachse der Befestigungseinrichtung (9) und der Aufnahmeeinrichtung (10) koaxial zu einer Längsachse (16) der Durchführung (14) des Stators verläuft.

7. Schweißbrennervorrichtung nach einem der vorhergehenden Ansprüche, **gekennzeichnet, durch** Isoliermittel, die die Befestigungseinrichtung vom Stator elektrisch isoliert, wobei mittels einer Kontakteinrichtung (24) der Stator und die Aufnahmeeinrichtung (10) elektrisch leitend miteinander verbunden sind.

8. Schweißbrennervorrichtung nach einem der vorhergehenden Ansprüchen, **dadurch gekennzeichnet, daß** die Kontakteinrichtung (24) Elemente aufweist, die sich zusammen mit dem Rotor um eine Achse drehen, wobei die Drehachse dieser Elemente mit der Drehachse (8) der Anschlußeinrichtung des Roboters fluchtet.

9. Schweißbrennervorrichtung nach Anspruch 7 oder 8, **dadurch gekennzeichnet, daß** die Kontakteinrichtung (24) als Schleifkontakteinrichtung ausgebildet ist.

10. Schweißbrennervorrichtung nach Anspruch 9, **gekennzeichnet durch** zumindest ein Kraftmittel, mit dem zumindest ein Schleifkontaktelement (28) der Schleifkontakteinrichtung an einen Kontaktpartner andrückbar ist.

11. Schweißbrennervorrichtung nach Anspruch 10, **gekennzeichnet durch** zumindest zwei Kraftmittel, mit denen das zumindest eine Schleifkontaktelement (28) in Bezug auf die Achse der rotatorischen Bewegung in axialer und in radialer Richtung an Kontaktpartner andrückbar ist.

12. Schweißbrennervorrichtung nach Anspruch 11, **dadurch gekennzeichnet, daß** die Kraftmittel federelastisch sind und das zumindest eine Schleifkontaktelement (28) sowohl an einen die Durchführung (14) radial umgebenden ersten Kontaktpartner, als auch an einen zum Schleifkontaktelement (28) axial versetzten zweiten Kontaktpartner andrückbar ist.

13. Schweißbrennervorrichtung nach einem der vorhergehenden Ansprüche 7 bis 12, **gekennzeichnet durch** einen glockenförmigen Abschnitt (23) des Stators, in dem die Schleifkontakteinrichtung angeordnet ist.

14. Schweißbrennervorrichtung nach einem der vorhergehenden Ansprüche, **gekennzeichnet durch** Isoliermittel **durch** die die Befestigungseinrichtung (9) gegenüber der Stromübertragungseinrichtung elektrisch isolierbar ist.

15. Schweißbrennervorrichtung nach einem der vorhergehenden Ansprüche, **dadurch gekennzeichnet, daß** die Durchführung (14) mit einer Ausnehmung (15) versehen ist, durch die sowohl der Schweißdraht (20) als auch Schutzgas dem Schweißbrenner (11) zuführbar sind.

16. Schweißbrennervorrichtung nach Anspruch 15, daß der elektrische Anschluß für das Schweißstromkabel Teil einer die Ausnehmung (15) begrenzenden Wand ist.

17. Schweißroboter zur Erzeugung von Schweißungen an Werkstücken, der als Knickarmroboter ausgebildet ist und mit einem Anschlußflansch versehen ist, an dem eine Schweißbrennervorrichtung anbringbar ist, **gekennzeichnet durch** eine Schweißbrennervorrichtung (7) nach einem oder mehreren der vorhergehenden Ansprüche 1 bis 16.

## Claims

1. A welding torch device (7) of a welding robot (1), which is provided for electric arc welding, particularly MIG or MAG welding, whereby the welding robot has a robot arm, on which is provided a connection device which can be rotated in relation to the robot arm, the device comprising
a fixing device (9) for attaching the welding torch device (7) to the welding robot (1),
a receiving device for holding a welding torch (11) and for transferring driven rotatory motions to the welding torch,
an electric connection (12, 19) for a welding power cable, by means of which a robot side of the welding torch device can be electrically connected to a welding power source,
a current transfer device, via which the welding power cable can be electrically connected to a welding torch side of the welding torch device, wherein the current transfer device has a stator, which is provided for the rotationally fixed arrangement in relation to the robot arm, but can be rotated in relation to the connection device on the welding robot side,
a leadthrough (14) of the stator, through which expendable supply material required for the welding process can be guided in the direction of the receiving device (10), wherein
the receiving device (10) and the fixing device (9) are embodied as rotors, which, as a result, can be rotated in relation to the stator, and the receiving device (10) and/or the fixing device (9) can be connected to the stator in an electrically conductive manner by means of an electric contact means (24),
**characterized by** the fixing device (9) of the rotor, which is designed for attaching to the connection device of the robot, whereby, by means of the attaching to the connection device of the robot, a rotational axis of the rotor is at least substantially aligned with the rotational axis (8) of the connection device of the robot and the rotor can be rotated about the rotational axis (8) as well as about the stator.

2. The welding torch device according to Claim 1, **characterized in that** a longitudinal axis (16) of the leadthrough is aligned with the rotational axis (8) of the connection device.

3. The welding torch device according to any of the two preceding Claims 1 or 2, **characterized in that** the stator has a rotationally fixed electric connection for the welding cable, through which the rotational axis of the connection device runs.

4. The welding torch device according to any of the preceding claims, **characterized in that** the receiving device (10) for the welding torch (11) is likewise provided with a leadthrough for the welding wire, whereby the leadthrough (14) of the stator and the leadthrough of the receiving device (10) run at least substantially coaxially to one another.

5. The welding torch device according to any of the preceding claims, **characterized in that** a longitudinal axis (16) of a recess (15) of the leadthrough (14) of the stator runs at least substantially coaxially to the rotational axis (8) of the rotatory motion of the connection flange on the robot side.

6. The welding torch device according to any of the preceding claims, **characterized in that** a common rotational axis of the fixing device (9) and the receiving (10) runs coaxially to a longitudinal axis (16) of the leadthrough (14) of the stator.

7. The welding torch device according to any of the preceding claims, **characterized by** insulating medium, which electrically insulates the fixing device from the stator, whereby the stator and the receiving device (10) are connected to one another in an electrically conductive manner by means of a contact means (24).

8. The welding torch device according to any of the preceding claims, **characterized in that** the contact means (24) has elements which are rotated together with the rotor about an axis, whereby the rotational axis of these elements are aligned with the rotational axis (8) of the connection device of the robot.

9. The welding torch device according to Claim 7 or 8, **characterized in that** the contact means (24) is embodied as a sliding contact means.

10. The welding torch device according to Claim 9, **characterized by** at least one force means, with which at least one sliding contact element (28) of the sliding contact means can be pressed against a contact partner.

11. The welding torch device according to Claim 10, **characterized by** at least two force means, with which the at least one sliding contact element (28) can be pressed against contact partners in the axial and radial directions in relation to the axis of the rotatory motion.

12. The welding torch device according to Claim 11, **characterized in that** the force means are springy, and the at least one sliding contact element (28) can be pressed against both a first contact partner radially surrounding the leadthrough (14) and a second contact partner axially offset to the sliding contact element (28).

13. The welding torch device according to any of the preceding Claims 7 to 12, **characterized by** a bell-shaped section (23) of the stator, in which the sliding contact means is arranged.

14. The welding torch device according to any of the preceding claims, **characterized by** insulating medium, by means of which the fixing device (9) can be electrically insulated with respect to the current transfer device.

15. The welding torch device according to any of the preceding claims, **characterized in that** the leadthrough (14) is provided with a recess (15) through which both the welding wire (20) and protective gas can be fed to the welding torch (11).

16. The welding torch device according to Claim 15, **characterized in that** the electric connection for the welding power cable is part of a wall defining the recess (15).

17. A welding robot for producing welds on workpieces, which is embodied as a folding arm robot and is provided with a connection flange, to which a welding torch device is able to be attached, **characterized by** a welding torch device (7) according to one or more of the preceding Claims 1 to 16.

## Revendications

1. Dispositif de chalumeau oxhydrique (7) d'un robot de soudage (1) qui est prévu pour des soudures électriques à l'arc, notamment pour des soudures MIG ou MAG, le robot de soudage comportant un bras de robot, sur lequel est prévu un dispositif de raccordement rotatif par rapport au bras du robot, comprenant
un système de fixation (9) pour monter le dispositif de chalumeau oxhydrique (7) sur le robot de soudage (1),
un dispositif de logement pour la fixation d'un chalumeau oxhydrique (11) et pour la transmission de mouvements rotatoires entraînés sur le chalumeau oxhydrique,
un branchement électrique (12, 19), pour un câble de courant de soudage, au moyen duquel un côté du robot du dispositif de chalumeau oxhydrique est susceptible d'être relié électriquement avec une source de courant de soudage,
un dispositif de transmission du courant, par l'intermédiaire duquel le câble de courant de soudage est susceptible d'être relié électriquement avec un côté du dispositif de chalumeau oxhydrique, le dispositif de transmission du courant comportant un stator, qui est prévu pour un agencement solidaire en rotation par rapport au bras du robot, mais qui est toutefois relativement rotatif par rapport au dispositif de raccordement situé du côté du robot de soudage,
un passage (14) pour le stator, à travers lequel l'une des matières consommables nécessaires pour le processus de soudage peut passer en direction du dispositif de logement (10),
le dispositif de logement (10) et le système de fixation (9) étant conçus sous la forme de rotors, qui de ce fait sont susceptibles d'être rotatifs par rapport au stator, et le dispositif de logement (10) et/ou le dispositif de fixation (9) étant susceptible(s) d'être assemblés par conduction électrique au moyen d'un dispositif de contact (24) électrique avec le stator,
**caractérisé par** le dispositif de fixation (9) du rotor, qui est conçu pour le montage sur le dispositif de branchement du robot, par montage sur le dispositif de raccord du robot, un axe de rotation du rotor étant aligné au moins sensiblement sur l'axe de rotation (8) du dispositif de branchement et le rotor étant rotatif autour de l'axe de rotation (8) ainsi qu'autour du stator.

2. Dispositif de chalumeau oxhydrique selon la revendication 1, **caractérisé en ce qu'**un axe longitudinal (16) du passage est aligné sur l'axe de rotation (8) du dispositif de branchement.

3. Dispositif de chalumeau oxhydrique selon l'une quelconque des revendications 1 ou 2 précédentes, **caractérisé en ce que** le stator comporte un branchement électrique solidaire en rotation pour le câble de soudage, à travers lequel s'écoule l'axe de rotation du dispositif de branchement.

4. Dispositif de chalumeau oxhydrique selon l'une quelconque des revendications précédentes, **caractérisé en ce que** le dispositif de logement (10) pour le chalumeau oxhydrique (11) est également doté d'un passage pour la baguette de soudure, le passage (14) du stator et le passage du dispositif de logement (10) s'écoulant de façon au moins sensiblement coaxiale l'un par rapport à l'autre.

5. Dispositif de chalumeau oxhydrique selon l'une quelconque des revendications précédentes, **caractérisé en ce qu'**un axe longitudinal (16) d'un évidement (15) du passage (14) du stator s'écoule de façon au moins sensiblement coaxiale à l'axe de rotation (8) du mouvement rotatoire de la bride de raccord côté robot.

6. Dispositif de chalumeau oxhydrique selon l'une quelconque des revendications précédentes, **caractérisé en ce que**, un axe de rotation commun du dispositif de fixation (9) et du dispositif de logement (10) s'écoule de façon coaxiale à un axe longitudinal (16) du passage (14) du stator.

7. Dispositif de chalumeau oxhydrique selon l'une quelconque des revendications précédentes, **caractérisé par** des moyens isolants, isolant électriquement le dispositif de fixation par rapport au stator, le stator et le dispositif de logement (10) étant assemblés entre eux par conduction électrique au moyen d'un dispositif de contact (24).

8. Dispositif de chalumeau oxhydrique selon l'une quelconque des revendications précédentes, **caractérisé en ce que** le dispositif de contact (24) comporte des éléments, qui en commun avec le rotor tournent autour d'un axe, l'axe de rotation desdits éléments étant aligné sur l'axe de rotation (8) du dispositif de branchement du robot.

9. Dispositif de chalumeau oxhydrique selon la revendication 7 ou 8, **caractérisé en ce que** le dispositif de contact (24) est conçu en tant que dispositif de contact frottant.

10. Dispositif de chalumeau oxhydrique selon la revendication 9, **caractérisé par** au moins un moyen de force, avec lequel au moins un élément de contact frottant (28) du dispositif de contact frottant est susceptible d'être pressé contre un partenaire de contact.

11. Dispositif de chalumeau oxhydrique selon la revendication 10, **caractérisé par** au moins deux moyens de force, avec lesquels le au moins un élément de contact frottant (28) est susceptible d'être pressé en direction axiale et en direction radiale sur des partenaires de contact, par rapport à l'axe du mouvement rotatoire.

12. Dispositif de chalumeau oxhydrique selon la revendication 11, **caractérisé en ce que** les moyens de force sont à déformation et **en ce que**, au moins un élément de contact frottant (28) est susceptible d'être pressé sur un premier partenaire de contact entourant le passage (14) en direction radiale, ainsi que sur un deuxième partenaire de contact, déporté en direction axiale par rapport à l'élément de contact frottant.

13. Dispositif de chalumeau oxhydrique selon l'une quelconque des revendications 7 à 12, **caractérisé par** une section (23) en forme de cloche du stator, dans laquelle est disposé le dispositif de contact frottant.

14. Dispositif de chalumeau oxhydrique selon l'une quelconque des revendications précédentes, **caractérisé par** des moyens isolants, par lesquels le dispositif de fixation (9) est susceptible d'être isolé électriquement par rapport au dispositif de transmission de courant.

15. Dispositif de chalumeau oxhydrique selon l'une quelconque des revendications précédentes, **caractérisé en ce que** le passage (14) est muni d'un évidement (15) à travers lequel aussi bien la baguette de soudure (20) qu'un gaz inerte peuvent être amenés vers le chalumeau oxhydrique (11).

16. Dispositif de chalumeau oxhydrique selon la revendication 15, **caractérisé en ce que** le branchement électrique pour le câble de courant de soudage est un élément d'une paroi délimitant l'évidement (15).

17. Robot de soudage pour créer des soudures sur des pièces à usiner, qui est conçu sous la forme d'un robot à bras articulé et qui est muni d'une bride de raccord, sur lequel un dispositif de chalumeau oxhydrique peut être monté, **caractérisé par** un dispositif de chalumeau oxhydrique (7) selon l'une quelconque ou plusieurs des revendications précédentes 1 à 16.
